# EUROPEAN PATENT APPLICATION

(11) **EP 1 638 194 A1**
(43) Date of publication of application: **22.03.2006**
(21) Application number: 04732741.6
(22) Date of filing: 13.05.2004
(51) Int. Cl.: H02K 49/10

(54) **EDDY-CURRENT REDUCTION GEAR**

(30) Priority: 19.05.2003 JP 2003140347; 19.05.2003 JP 2003140348
(71) Applicant: Isuzu Motors Limited, Shinagawa-ku, Tokyo 140-0013 (JP)
(72) Inventor: KUWAHARA, Tohru, c/o Isuzu Motors Limited, Fujisawa-shi, Kanagawa 2520806 (JP); OGAWA, Makoto, Isuzu Advanced Engineering Ctr. Ltd, Fujisawa-shi, Kanagawa 2520806 (JP)
(74) Representative: Schaumburg, Karl-Heinz
(86) International application number: PCT/JP2004/006432
(87) International publication number: WO 2004/102778

(57) **Abstract**

The object of the present invention is to provide an eddy current retarder capable of ensuring brake capacity and preventing magnetic leak. In one preferred embodiment of the invention, an eddy current retarder (1) comprises a first magnet ring (18) disposed opposite a brake rotor (3) and comprising a plurality of permanent magnets (16) disposed with a spacing in the circumferential direction, and a second magnet ring (7) disposed opposite the first magnet ring (18) and comprising a plurality of permanent magnets (10) disposed with a spacing in the circumferential direction, wherein the magnetic force of each permanent magnet (10) of the second magnet ring (7) is set larger than the total magnetic force of one or a plurality of permanent magnets (16) of the first magnet ring (18) serving as a partner in forming a magnetic circuit in a brake OFF state. As a result, the magnetic flux leaking to the brake rotor (3) during the brake OFF can be almost zeroed.

## Description

### TECHNICAL FIELD

The present invention relates to an eddy current retarder suitable as an auxiliary brake mainly in large vehicles.

### BACKGROUND ART

Eddy current retarders have been used as auxiliary brakes of large vehicles such as trucks.

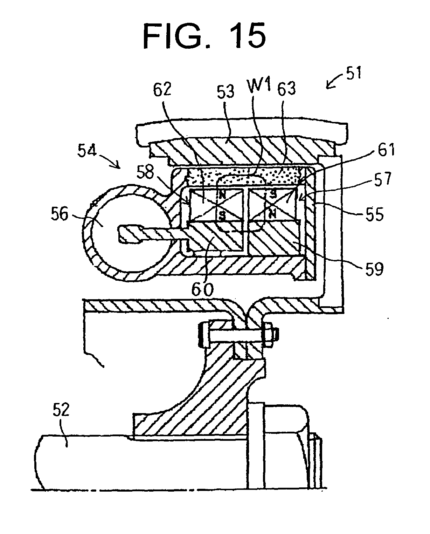

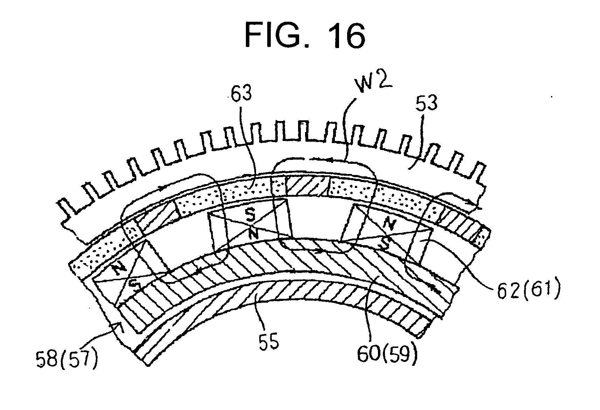

An example of the conventional eddy current retarder will be described below with reference to FIG. 15 and FIG. 16.

This eddy current retarder 51 comprises a drum-shaped brake rotor 53 mounted on a rotation shaft 52 such as a propulsion shaft of a vehicle and a stator 54 (magnetic force source) disposed radially on the inner side of the brake rotor 53 and mounted on the fixed side such as a mission case.

The stator 54 has a hollow casing 55 supported on the fixed side, and two magnet rings 57, 58 disposed inside the casing 55.

The first magnet ring 57 is so fixed that it cannot rotate with respect to the casing 55, and the second magnet ring 58 is disposed parallel to the first magnet ring 57 and rotatably accommodated inside the casing 55. The second magnet ring 58 is rotated by an actuator 56.

The first and second magnet rings 57, 58 respectively have support rings 59, 60 made from a magnetic material and a plurality of permanent magnets 61, 62 mounted with the prescribed spacing in the circumferential direction on the support rings 59, 60. Permanent magnets 61, 62 have magnetic pole surfaces at both radial ends thereof and are so set that the orientations of the magnetic pole surfaces differ between the magnets adjacent in the circumferential direction.

A plurality of pole pieces 63 composed of a magnetic material (ferrous material and the like) are embedded in the outer peripheral wall of the casing 55 with the same spacing in the circumferential direction.

When the retardation braking of the eddy current retarder is OFF, the second magnet ring 58 is rotated by the actuator 56 and each permanent magnet 61 of the first magnet ring 57 and each permanent magnet 62 of the second magnet ring 58 are positioned in a phase such that they face each other by different magnetic poles. As a result, a short magnetic circuit W1 is formed between the first and second magnet rings 57, 58 and the pole piece 63, as shown in FIG. 15. Therefore, no magnetism acts upon the brake rotor 53 and eddy current is not generated. In other words, no retardation braking occurs.

On the other hand, when the retardation braking is ON, the second magnet ring 58 is rotated and the permanent magnets 61 of the first magnet ring 57 and the permanent magnets 62 of the second magnet ring 58 face each other by identical magnetic poles. As a result, as shown in FIG. 16, the magnetic flux from the permanent magnets 61, 62 of the first and second magnet rings 57, 58 reaches the brake rotor 53 through the pole piece 63 and a magnetic circuit W2 is formed between the first and second magnet rings 57, 58, pole piece 63, and brake rotor 53. Therefore, an eddy current is generated in the brake rotor 53, and the retardation braking of the rotation shaft 52 is effected by the interaction of this eddy current and the magnetic flux from the permanent magnets 61, 62.

Such an eddy current retarder is described, for example, in Japanese Patent Application Laid-open No H07-123697.

However, in such an eddy current retarder, the magnetic force of the permanent magnets 61, 62 has to be increased when the increase in brake capacity is desired. However, if the magnetic force of magnets 61, 62 is increased, the resultant problem is that part of the magnetic flux leaks to the brake rotor 53 during the brake OFF, a magnetic leak circuit is formed, and sliding braking is generated.

Therefore, ensuring brake capacity during the brake ON and also preventing the magnetic leak during the brake OFF is a tasks to be solved in developing an eddy current retarder.

### DISCLOSURE OF THE INVENTION

It is an object of the present invention to resolve the above-described problems and to provide an eddy current retarder that both ensures the brake capacity and prevents the magnetic leak.

In one embodiment of the present invention, an eddy current retarder comprises a brake rotor mounted on a rotation shaft, a first magnet ring disposed opposite the brake rotor and comprising a plurality of permanent magnets disposed with a spacing in the circumferential direction, and a second magnet ring disposed opposite the first magnet ring and comprising a plurality of permanent magnets disposed with a spacing in the circumferential direction, wherein the magnetic force of each permanent magnet of the second magnet ring is set larger than the total magnetic force of one or a plurality of permanent magnets of the first magnet ring serving as a partner in forming a magnetic circuit during a brake OFF.

In this embodiment, the magnetic flux of each permanent magnet of the first magnet ring is almost entirely attracted to each permanent magnet side of the second magnet ring during the brake OFF. Therefore, the magnetic flux does not leak to the brake rotor side. As a result, the magnetic force of the permanent magnets of the first magnet ring and second magnet ring can be increased and the object of ensuring the brake capacity and preventing the magnetic leak can be attained.

Here, the area of the magnetic pole surface of the permanent magnet of the second magnet ring may be set almost equal to the total area of the magnetic pole surface of one or a plurality of permanent magnets of the first magnet ring forming together therewith a magnetic circuit during the brake OFF, and the magnetic flux density of the permanent magnets of the second magnet ring may be made larger than the magnetic flux density of the permanent magnets of the first magnet ring.

Alternatively, the magnetic flux densities of the permanent magnets of the second magnet ring and permanent magnets of the first magnet ring may be set almost equal to each other and the area of the magnetic pole surface of the permanent magnet of the second magnet ring may be set larger than the total area of the magnetic pole surface of one or a plurality of permanent magnets of the first magnet ring forming together therewith a magnetic circuit during the brake OFF.

Furthermore, the opposite phases of the first magnet ring and the second magnet ring during the brake OFF may be set based on the magnetic force, magnetic flux density, or difference or ratio of the magnetic pole surface areas in the permanent magnets of the second magnet ring and permanent magnets of the first magnet ring.

In another embodiment of the present invention, an eddy current retarder comprises a brake rotor mounted on a rotation shaft, an outer magnet ring disposed opposite the brake rotor from the inner side thereof and comprising a plurality of permanent magnets that are set with a spacing in the circumferential direction so that magnetic poles facing each other in the circumferential direction have the same polarity, and an inner magnet ring disposed opposite the outer magnet ring from the inner side thereof and comprising a plurality of permanent magnets that are set with a spacing in the circumferential direction so that magnetic poles facing the outer magnet ring alternate in the circumferential direction, where a brake ON state in which a magnetic circuit is formed between the outer and inner magnet rings and the brake rotor is obtained by causing the outer magnet ring and the inner magnet ring to oppose each other at the prescribed phase, and a brake OFF state in which a short magnetic circuit is formed between the outer magnet ring and the inner magnet ring is obtained by rotating the outer magnet ring and/or the inner magnet ring through the prescribed phase from the brake ON state, wherein the magnetic force of the permanent magnet of the inner magnet ring is set larger than the total magnetic force of one or a plurality of permanent magnets of the outer magnet ring serving as a partner in forming with one another a magnetic circuit in the brake OFF state and magnetic flux leaking to the brake rotor during the brake OFF is almost zeroed.

Here, the outer magnet ring may comprise a ring-shaped magnetic member and the plurality of permanent magnets embedded with a constant spacing in the circumferential direction in the magnetic member, and a thin sheet section composed of the magnetic member may be formed on the radial outside of each permanent magnet.

In yet another embodiment, an eddy current retarder comprises a brake rotor mounted on a rotation shaft, a first magnet ring disposed opposite the brake rotor and comprising a plurality of permanent magnets disposed with a spacing in the circumferential direction and having magnetic poles on end surfaces on both sides in the circumferential direction, and a second magnet ring disposed opposite the first magnet ring and comprising a plurality of permanent magnets disposed with a spacing in the circumferential direction and having magnetic poles on end surfaces on both sides in the circumferential direction, wherein the ratio of the magnetic force of the magnet of the first magnet ring and the magnetic force of the magnet of the second magnet ring is set within a range of 1 : (about 1.2 to about 1.6).

Here, the magnetic forces per unit surface area of the magnets of the first magnet ring and second magnet ring may be set almost equal to each other, and the ratio of the area of the magnetic pole surface of the magnet of the first magnet ring and the area of the magnetic pole surface of the magnet of the second magnet ring is set within a range of 1 : (about 1.2 to about 1.6).

Furthermore, the axial lengths and circumferential lengths of the magnets of the first magnet ring and second magnet ring may be set almost equal to each other, and the ratio of the radial length of the magnet of the first magnet ring and the radial length of the magnet of the second magnet ring may be set within a range of 1 : (about 1.2 to about 1.6).

In yet another embodiment of the present invention, an eddy current retarder comprises a brake rotor mounted on a rotation shaft, an outer magnet ring disposed opposite the brake rotor from the inner side thereof and comprising a plurality of permanent magnets that are set with a spacing in the circumferential direction so that magnetic poles facing each other in the circumferential direction have the same polarity, and an inner magnet ring disposed opposite the outer magnet ring from the inner side thereof and comprising a plurality of permanent magnets that are set with a spacing in the circumferential direction so that magnetic poles facing each other in the circumferential direction have the same polarity, a brake ON state in which a magnetic circuit is formed between the outer and inner magnet rings and the brake rotor is obtained by causing the outer magnet ring and the inner magnet ring to oppose each other at the prescribed phase, and a brake OFF state in which a short magnetic circuit is formed between the outer magnet ring and the inner magnet ring is obtained by rotating the outer magnet ring and/or the inner magnet ring through the prescribed phase from the brake ON state, wherein the ratio of the magnetic force of the magnet of the outer magnet ring and the magnetic force of the magnet of the inner magnet ring is set within a range of 1 : (about 1.2 to about 1.6).

Here, the outer magnet ring may comprise a ring-shaped magnetic member and a plurality of permanent magnets embedded with a constant spacing in the circumferential direction in the magnetic member, and a thin sheet section composed of the magnetic member may be formed on the radial outside of each permanent magnet.

Protruding sections that protrude radially outwardly may be formed in the portions between the permanent magnets in said magnetic member.

Other objects, features, and operation effects of the present invention will become obvious to a person skilled in the art upon reading and understanding the following detailed description of the present invention.

### BRIEF DESCRIPTION OF THE DRAWINGS

FIG. 1 is a side sectional view of the upper half of the eddy current retarder of an embodiment of the present invention;
FIG. 2 is a partial front sectional view illustrating the state during the brake OFF of the eddy current retarder shown in FIG. 1;
FIG. 3 is a partial front sectional view illustrating the state during the brake ON of the eddy current retarder shown in FIG. 1;
FIG. 4 shows the relationship between the ratio of the magnetic force of the inner permanent magnet to the total force of the outer permanent magnets and the magnetic flux acting upon the brake rotor during the brake OFF;
FIG. 5 is a partial front sectional view illustrating magnetic leak during the brake OFF;
FIG. 6 illustrates the relationship between the rotation phase of the inner magnet ring and the magnetic flux acting upon the brake rotor;
FIG. 7a is a side sectional view of the upper half of the eddy current retarder of another embodiment of the present invention;
FIG. 7b is a partial plan sectional view of the eddy current retarder shown in FIG. 7a;
FIG. 8 is a side sectional view of the upper half of the eddy current retarder of yet another embodiment of the present invention;
FIG. 9 is a partial front sectional view illustrating the state during the brake OFF of the eddy current retarder shown in FIG. 8;
FIG. 10 is a partial front sectional view illustrating the state during the brake ON of the eddy current retarder shown in FIG. 8;
FIG. 11 illustrates the relationship between the ratio of the lengths in the radial direction of the permanent magnets of the first and second magnet rings and the magnetic flux density in the outermost peripheral section of the magnetic member during the brake OFF;
FIG. 12 illustrates the relationship between the ratio of the lengths in the radial direction of the permanent magnets of the first and second magnet rings and the magnetic flux density in the outermost peripheral section of the magnetic member during the brake ON;
FIG. 13 illustrates the relationship between the ratio of the lengths in the radial direction of the permanent magnets of the first and second magnet rings and the value obtained by dividing the magnetic flux density by the total radial length of the permanent magnets;
FIG. 14 is a side sectional view of the upper half of the eddy current retarder of yet another embodiment of the present invention;
FIG. 15 is a side sectional view of the upper half of the conventional eddy current retarder; and
FIG. 16 is a partial front sectional view of the conventional eddy current retarder.

### BEST MODE FOR CARRYING OUT THE INVENTION

The preferred embodiment of the present invention will be described below with reference to the appended drawings.

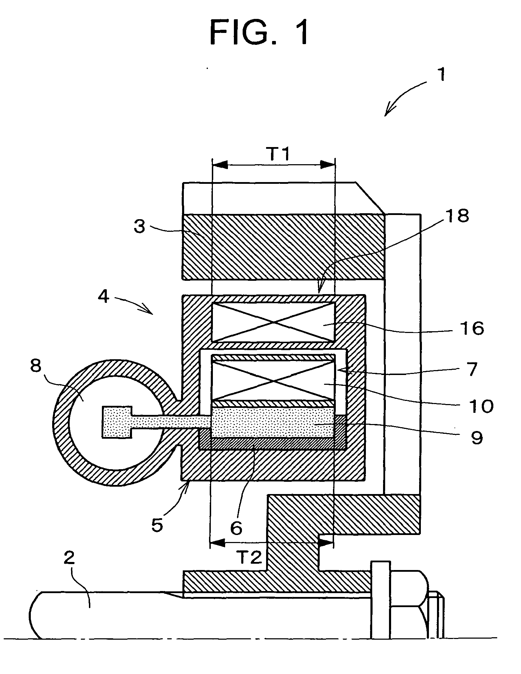

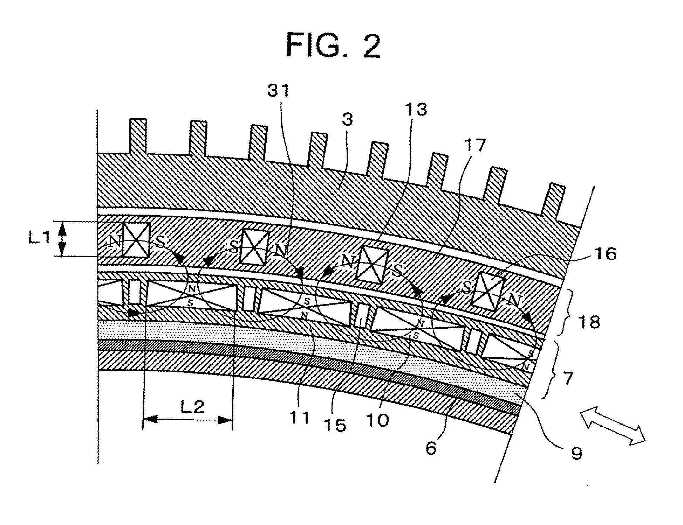

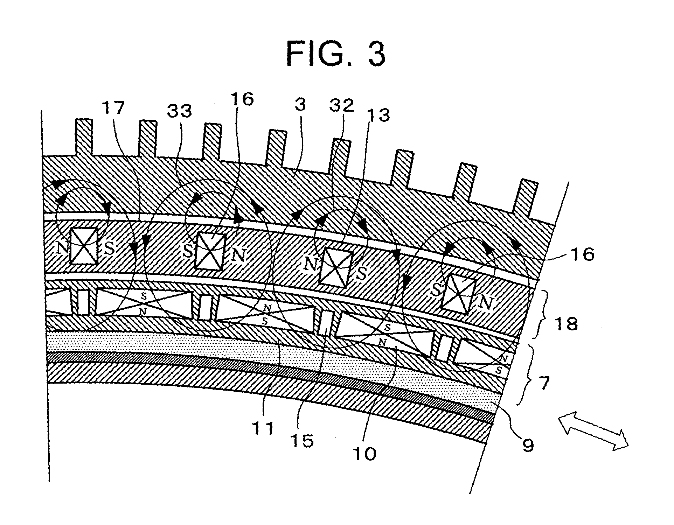

FIG. 1 is a side sectional view of the upper half section of the eddy current retarder of the present embodiment. FIG. 2 is a partial front sectional view illustrating the state of the eddy current retarder during the brake OFF. FIG. 3 is a partial front sectional view illustrating the state of the eddy current retarder during the brake ON.

As shown in FIG. 1, an eddy current retarder 1 comprises a drum-shaped brake rotor 3 mounted on a rotation shaft 2 such as a propulsion shaft of a vehicle and a stator 4 (magnetic force source) disposed radially on the inner side of the brake rotor 3 and mounted on a fixed side such as a mission case. A retardation braking of the rotation shaft 2 is induced by generating an eddy current in the rotor 3 by supplying magnetism from the stator 4 to the rotor 3, and the retardation braking is canceled by shielding the magnetism inside the stator 4.

The stator 4 has a hollow casing 5 supported on the fixed side, and an outer magnet ring (first magnet ring) 18 is mounted on the outer peripheral wall of the casing 5 opposite the inner surface of the brake rotor 3. As shown in FIG. 2 and FIG. 3, the outer magnet ring 18 has a ring-like magnetic member 17 (a laminated body of electric steel sheets, an iron block material, or the like) mounted on the casing 5 and a plurality of permanent magnets 16 embedded in the magnetic member 17 with a constant spacing in the circumferential direction. Each permanent magnet 16 has a magnetic pole surface on both end portions thereof in the circumferential direction and the adjacent permanent magnets 16 are so set as to face each other by the identical poles. A thin sheet section 13 composed of the magnetic member 17 is formed on the radial outside of each permanent magnet 16.

An inner magnet ring (second magnet ring) 7 is accommodated inside the casing 5. This inner magnet ring 7 faces the outer magnet ring 18 from the side (radial inner side) opposite that of the brake rotor 3. The inner magnet ring 7 is provided so that it can be rotated via a bush 6 with respect to the casing 5 and is rotated by an actuator 8 (for example, a hydraulic cylinder) provided on the side section of the casing 5. The inner magnet ring 7 has a support ring 9 composed of a nonmagnetic body (austenitic stainless steel or the like) a magnetic member 11 (a laminated body of electric steel sheets, an iron block material, or the like) provided on the outer periphery of the support ring 9, and a plurality of permanent magnets 10 embedded in the magnetic member 11 with a constant spacing in the circumferential direction. Permanent magnets 10 have magnetic pole surfaces on both radial ends thereof and are so set that the magnetic poles facing the outer magnet ring 18 differ alternately between the magnets 10 adjacent in the circumferential direction. The circumferential length of permanent magnets 10 of the inner magnet ring 7 is basically set to be almost equal to the pitch between the permanent magnets 16 of the outer magnet ring 18. Orifices 15 of a rectangular shape are formed in the sections located between permanent magnets 10 in the magnetic member 11.

When the retardation braking of the eddy current retarder is OFF, the inner magnet ring 7 is rotated by the actuator 8 and, as shown in FIG. 2, each permanent magnet 10 of the inner magnet ring 7 is positioned between the permanent magnets 16 of the outer magnet ring 18, and the permanent magnets 10 of the inner magnet ring 7 and the permanent magnets 16 of the outer magnet ring 18 are positioned in a phase such that they face each other by different magnetic poles. As a result, a short magnetic circuit 31 is formed between the permanent magnets 10 of the inner magnet ring 7 and the magnetic member 11 and between the permanent magnets 16 of the outer magnet ring 18 and the magnetic member 17. Therefore, no magnetism acts upon the brake rotor 3 and no retardation braking is generated. At this time, the magnetic flux flowing from the permanent magnets 16 of the outer magnet ring 18 to the brake rotor 3 is short circuited through the thin sheet section 13 and magnetic leak to the brake rotor 3 can be effectively prevented.

On the other hand, when the retardation braking is ON, the inner magnet ring 7 is rotated and, as shown in FIG. 3, each permanent magnets 10 of the inner magnet ring 7 are positioned between the permanent magnets 16 of the outer magnet ring 18 and the permanent magnets 10 of the inner magnet ring 7 and the permanent magnets 16 of the outer magnet ring 18 are positioned in a phase in which they face each other by identical magnetic poles. As a result, magnetic circuits 32, 33 are formed between the permanent magnets 10, 16 of the inner and outer magnet rings 7, 18, the magnetic members 11, 17, and the brake rotor 3. Therefore, an eddy current is generated in the brake rotor 3, and the retardation braking of the rotation shaft 2 is effected by the interaction of this eddy current and the magnetic flux from the permanent magnets 10, 16. At this time, because orifices 15 have been formed in the magnetic member 11 of the inner magnet ring 7, the magnetic flux from the permanent magnets 10 is prevented from being short circuited through the magnetic member 11.

The inventors have discovered that in such an eddy current retarder, magnetic leak during the brake OFF can be almost zeroed if the magnetic force of the permanent magnets 10 of the inner magnet ring 7 is made larger than the total magnetic force of the permanent magnets 16 of the outer magnet ring 18 forming with one another a magnetic circuit during the brake OFF (state shown in FIG. 2). More specifically, in the present embodiment, during the brake OFF, a magnetic circuit is formed by one inner permanent magnet 10 and two outer permanent magnets 16 located on both sides thereof. Therefore, magnetic leak can be eliminated by setting a magnetic force W2 of the inner permanent magnet 10 so that it is larger than a doubled magnetic force W1 of each outer permanent magnet 16 (W2 > 2 x W1).

A method of creating different magnetic fluxes (magnetic flux per unit surface area) in the permanent magnets 10, 16, a method of producing permanent magnets 10, 16 with different area of magnetic pole surface, or a combination of those methods can be employed for making the magnetic force of the inner permanent magnets 10 greater than the magnetic force of the outer permanent magnets 16.

For example, when the area of the magnetic pole surface (radial end surface) of the inner permanent magnet 10 is set almost equal to the total area of the magnetic pole surface of the two outer permanent magnets 16 serving as partners for forming a magnetic circuit during the brake OFF, that is, when the area of the magnetic pole surface of each inner permanent magnet 10 is made equal to a doubled area of the magnetic pole surface of each outer permanent magnet 16, if the magnetic flux density of the inner permanent magnet 10 is higher than the magnetic flux density of the outer permanent magnet 16, the magnetic force of the inner permanent magnet 10 can be made larger than the total magnetic force of the two outer permanent magnets 16 serving as partners for forming a magnetic circuit.

Furthermore, when the magnetic flux densities of each inner permanent magnet 10 and each outer permanent magnet 16 are set almost equal to each other, if the area of the magnetic pole surface of the inner permanent magnet 10 is made larger than the total area of the magnetic pole surfaces of the two outer permanent magnets 16 forming a magnetic circuit during the brake OFF, then the magnetic force of the inner permanent magnet 10 can be made larger than the total magnetic force of the two outer permanent magnets 16 serving as partners for forming a magnetic circuit. For example, when the axial length T1 of the outer permanent magnet 16 is set almost equal to the axial length T2 of the inner permanent magnet 10, the circumferential length L2 (see FIG. 2) of the inner permanent magnet 10 may be larger than a doubled radial length L1 of the outer permanent magnet 16 (L2 > 2 x L1). Alternatively, when the peripheral length L2 of the inner permanent magnet 10 is made almost equal to a doubled radial length L1 of the outer permanent magnet 16, the axial length T2 of the inner permanent magnet 10 may be larger than the axial length T1 of the outer permanent magnet 16 (T2 > T1).

Furthermore, even when the magnetic flux densities of each inner permanent magnet 10 and each outer permanent magnet 16 are set almost equal to each other and the area of the magnetic pole surface of the inner permanent magnet 10 is made equal to a doubled area of the magnetic pole surface of each outer permanent magnet 16, if the radial length of the inner permanent magnet 10 is made larger than the circumferential length of the outer permanent magnet 16, then the magnetic force of the inner permanent magnets 10 can be made larger than the magnetic force of the outer permanent magnets 16. In other words, the volume of the inner permanent magnets 10 may be more than a doubled volume of the outer permanent magnets 16.

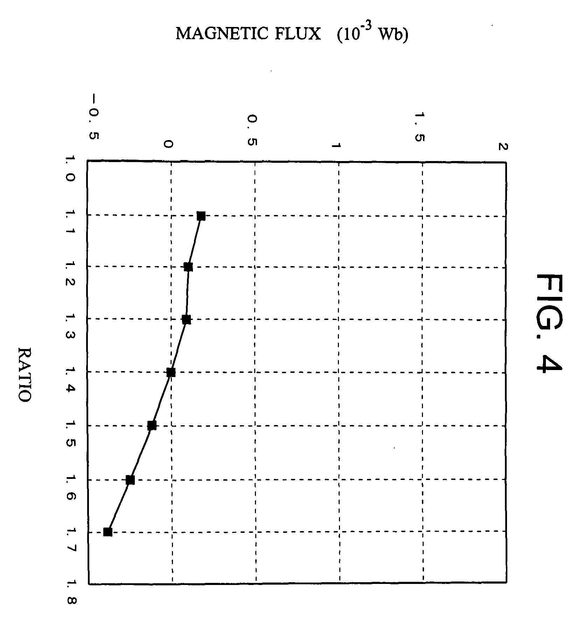

The inventors have confirmed the generation of magnetic leak by varying the ratio of the magnetic force of the inner permanent magnet 10 and the total magnetic force of the outer permanent magnets 16 serving as partners for forming a magnetic circuit during the brake OFF. The results are shown in FIG. 4. Here, the test was conducted by making the magnetic flux densities (magnet capacities) of the inner and outer permanent magnets 10, 16 almost equal to each other and varying the ratio of the area of the magnetic pole surface of the inner permanent magnet 10 and the total area of the magnetic pole surface of the outer permanent magnets 16. Here, the test was conducted by varying the ratio of the magnetic force of the inner permanent magnet 10 to the total magnetic force of the outer permanent magnets 16 within a range of 1.1 to 1.7. The ratio being 1.0 means that the magnetic force of the inner permanent magnet 10 is equal to a doubled magnetic force of each outer permanent magnet 16.

In the figure, the ratio of the magnetic force of the inner permanent magnet 10 to the total magnetic force of the outer permanent magnets 16 is plotted against the abscissa, and the magnetic flux acting upon the brake rotor 3 in the brake OFF state is plotted against the ordinate.

As shown in the figure, the magnetic flux acting upon the brake rotor 3 during the brake OFF is generated to a certain degree on the positive side when the aforementioned ratio is 1.1 and then gradually decreases with the increase in the ratio. When the ratio is about 1.4, the magnetic flux becomes almost zero, and if the ratio exceeds 1.4, the magnetic flux is generated on the negative side.

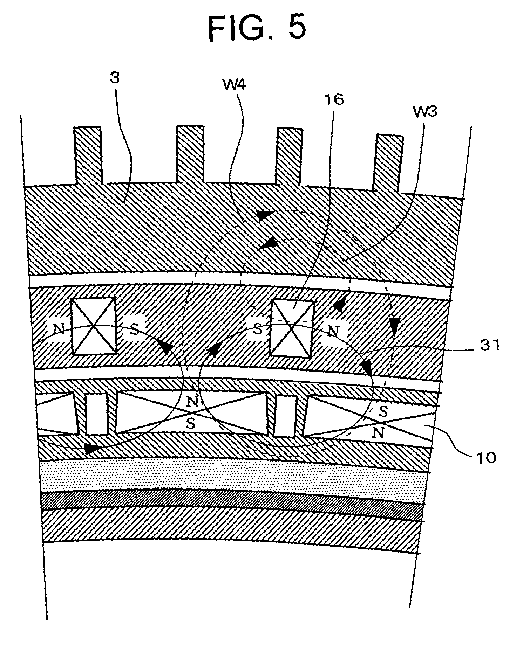

A positive magnetic flux acts upon the brake rotor 3 when the ratio is less than 1.4 apparently because the force attracting the magnetic flux of the outer permanent magnet 16 from the inner permanent magnet 10 is small and, as shown by a dot line W3 in FIG. 5, part of the magnetic flux of the outer permanent magnets 16 leaks to the brake rotor 3 and forms a magnetic leak circuit.

Furthermore, the ratio being 1.4 means that the entire magnetic flux of the outer permanent magnets 16 is attracted to the inner permanent magnets 10 and there is practically no magnetic flux leaking to the brake rotor 3. Therefore, the magnetic leak during the brake OFF can be almost entirely eliminated if the ratio of the magnetic force of the inner permanent magnet 10 to the total magnetic force of the outer permanent magnets 16 is made about 1.4.

A negative magnetic flux acts upon the brake rotor 3 when the ratio is more than 1.4 apparently because the magnetic force of the inner permanent magnet 10 becomes too large and, as shown by a dot line W4 in FIG. 5, part of the magnetic flux of the inner permanent magnets 10 leaks to the brake rotor 3 and forms a magnetic leak circuit. In other words, the magnetic flux assumes a negative value because a magnetic leak circuit W4 appears in the direction opposite that of the magnetic leak circuit W3 created by the outer permanent magnets 16.

As a result, if the magnetic force of the inner permanent magnet 10 is made larger than the total magnetic force of the outer permanent magnets 16 forming together therewith a magnetic circuit in the brake OFF state, then the magnetic leak created by the outer permanent magnets 16 can be eliminated. However, it is clear that if the magnetic force of the inner permanent magnet 10 is too large, a magnetic leak circuit created by the inner permanent magnets 10 is formed.

Because the optimum ratio, which makes it possible to almost zero the magnetic leak, apparently changes depending of the structure of the eddy current retarder and the size of the inner and outer permanent magnets 10, 16, this ratio is preferably appropriately set for each type of the eddy current retarder.

Furthermore, the inventors have discovered that magnetic leak can be prevented even more reliably by making the magnetic force of the inner permanent magnet 10 larger than the total magnetic force of the outer permanent magnets 16 forming together therewith a magnetic circuit 31 in the brake OFF state and also by making adequate opposite phases of the inner magnet ring 7 and outer magnet ring 18 that is, opposite phases of the inner permanent magnets 10 and outer permanent magnets 16, during the brake OFF. This issue is explained below.

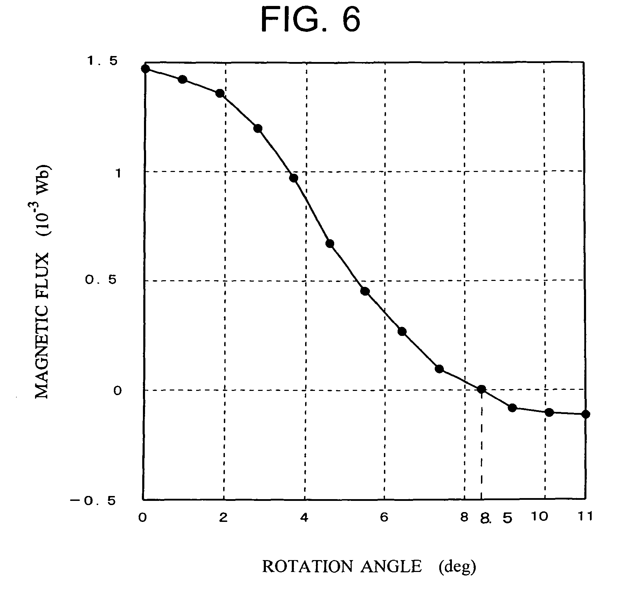

FIG. 6 shows the results obtained in analyzing the magnetic flux acting upon the brake rotor 3 when the inner magnet ring 7 was gradually rotated from the brake ON state in the case where the magnetic force of the inner permanent magnet 10 was by a factor of 1.5 larger than the total magnetic force of the outer permanent magnets 16.

In the figure, the rotation angle of the inner magnet ring 7 is plotted against the abscissa, and the angle of 0° corresponds to the phase in the brake ON state. In other words, in this state, as shown in FIG. 3, each inner permanent magnet 10 is positioned exactly in the middle of the corresponding outer permanent magnet 16 and the permanent magnets face each other by the identical poles. The angle of 11° represents the phase in which the inner magnet ring 7 was rotated through one pitch of the inner permanent magnets 10. In other words, in this state, as shown in FIG. 2, each inner permanent magnet 10 is positioned exactly in the middle of the corresponding outer permanent magnet 16 and the permanent magnets face each other by different poles.

As follows from FIG. 6, as the inner magnet ring 7 rotates from 0°, the magnetic flux acting upon the brake rotor 3 gradually decreases. Furthermore, when the inner magnet ring 7 is rotated through about 8.5°, the magnetic flux becomes almost zero. If the inner magnet ring 7 is further rotated, a negative magnetic flux (magnetic flux in the opposite direction) acts upon the brake rotor 3. Therefore, when the magnetic force of the inner permanent magnet 10 is made 1.5 times the total magnetic force of the outer permanent magnets 16, the magnetic leak can be almost entirely eliminated by rotating the inner magnet ring 7 through a phase somewhat less than one pitch of the inner permanent magnets 10 (about 8.5° with respect to one pitch of 11°) during the brake OFF.

In the above-described test illustrated by FIG. 4, the inner magnet ring 7 was rotated through one pitch of the inner permanent magnets 10 during the brake OFF. Therefore, when the magnetic force of the inner permanent magnet 10 is about 1.4 times the total magnetic force of the outer permanent magnets 16, magnetic leak can be almost entirely eliminated if the rotation phase of the inner magnet ring 7 during the brake OFF is made equal to one pitch of the inner permanent magnets 10.

Thus, the rotation angle of the inner magnet ring 7 at which the magnetic leak can be minimized varies depending on the difference (or ratio) of the magnetic force of the inner permanent magnet 10 and the total magnetic force of the outer permanent magnets 16. Therefore, the magnetic leak can be prevented more reliably by setting the opposite phases of the outer magnet ring 18 and inner magnet ring 7 in a brake OFF state based on the difference (ratio) of magnetic forces, magnetic flux densities, or surface area of magnetic poles in the inner permanent magnets 10 and outer permanent magnets 16. Based on a variety of tests, the inventors have confirmed that the rotation phase of the inner magnet ring 7 during the brake OFF may be decreased as the magnetic force of the inner permanent magnet 10 gets larger than the total magnetic force of the outer permanent magnets 16.

The above-described results suggest that the brake capacity during the brake OFF can be ensured and the magnetic leak during the brake OFF can be prevented by setting the phase of the inner magnet ring 7 in the brake OFF state correspondingly to the ratio of the magnetic force of the inner permanent magnet 10 and the total magnetic force of the outer permanent magnets 16.

The reason therefor is as follows. First, because a magnetic flux acting upon the brake rotor 3 may be increased, the improvement in brake capacity during the brake OFF can be attained by increasing the magnetic force of the inner permanent magnets 10. However, as follows from FIG. 4, when the rotation phase of the inner magnet ring 7 is equal to 1 pitch of the inner permanent magnets 10, if the magnetic force of the inner permanent magnets 10 becomes too high (here, if it is made more than 1.4 times the total magnetic force of the outer permanent magnets 16), magnetic leak caused by the inner permanent magnets 10 occurs during the brake OFF. Accordingly, this magnetic leak is avoided by decreasing the rotation phase of the inner permanent magnets to less than 1 pitch. In other words, the improvement in brake capacity is attained by increasing the magnetic force of the inner permanent magnets 10, whereas the magnetic leak can be zeroed by setting the rotation phase of the inner magnet ring 7 based on the difference (or ratio) in magnetic force between the inner permanent magnets 10 and outer permanent magnets 16.

Furthermore, the above-described embodiment is merely an example and various modifications thereof are possible.

For example, in the above-described embodiment, the explanation was conducted with respect to a configuration where the inner magnet ring 7 was rotated, but the present invention can be also employed in a configuration in which the inner magnet ring 7 is fixed and the outer magnet ring 18 is rotated.

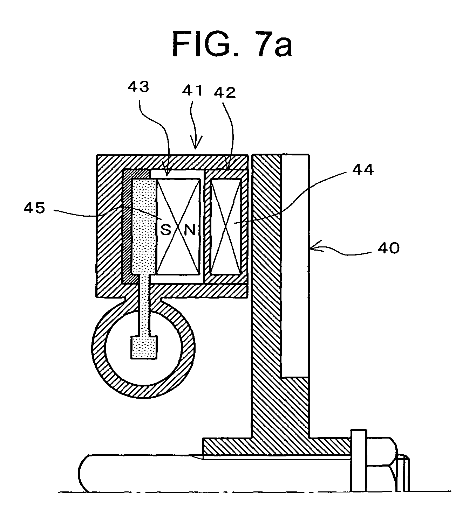

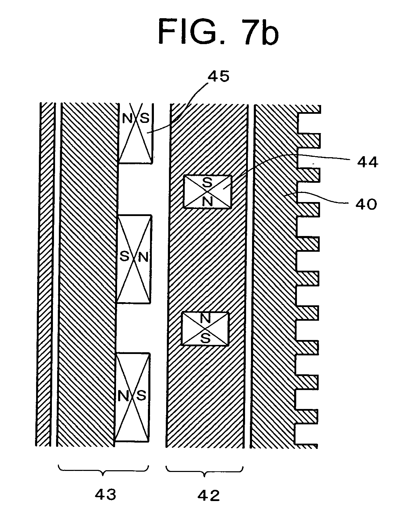

Furthermore, as shown in FIG. 7a and FIG. 7b, the present invention can be also employed in an eddy current retarder of a type equipped with a disk-shaped brake rotor 40. In this configuration, a casing 41 is mounted on the fixed side opposite, from the side section, the brake rotor 40, and a first magnet ring 42 (equivalent to the outer magnet ring 18 shown in FIG. 1) is mounted on the casing 41. A second magnet ring 43 (equivalent to the inner magnet ring 7 in FIG. 1) is rotatably provided inside the casing 41 and this second magnet ring 43 faces the first magnet ring 42 from the side opposite that of the brake rotor 40. The first magnet ring 42 comprises a plurality of permanent magnets 44 disposed with a prescribed spacing in the circumferential direction and set so that the magnetic poles facing each other in the circumferential direction are of the same polarity. The second magnet ring 43 comprises a plurality of permanent magnets 45 disposed with a prescribed spacing in the circumferential direction and set so that the magnetic poles facing the first magnet ring 42 alternate in the circumferential direction.

In such an eddy current retarder, too, magnetic leak can be reliably prevented by making the magnetic force of each permanent magnet 45 of the second magnet ring 43 larger at the prescribed ratio than the total magnetic force of the magnets 44 of the first magnet ring 42 forming together therewith a magnetic circuit in the brake OFF state and by adequately setting the opposite phases of the first magnet ring 42 and second magnet ring 43 during the brake OFF correspondingly to this ratio.

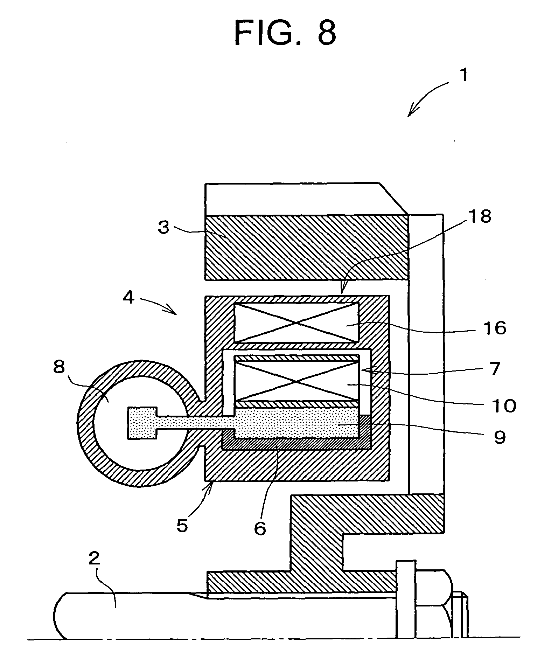

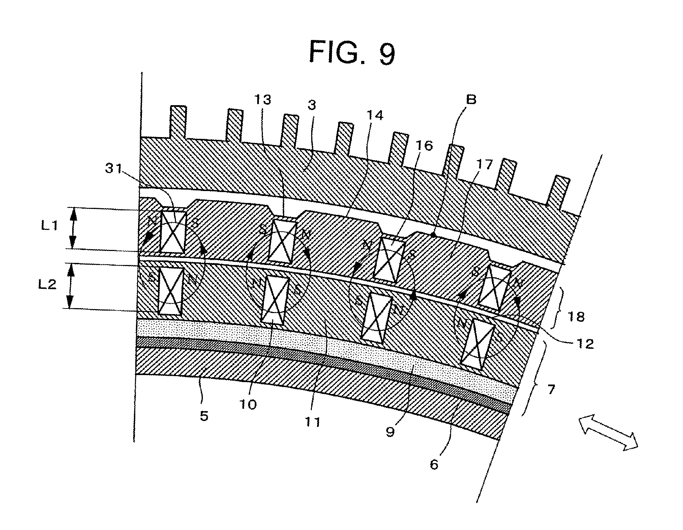

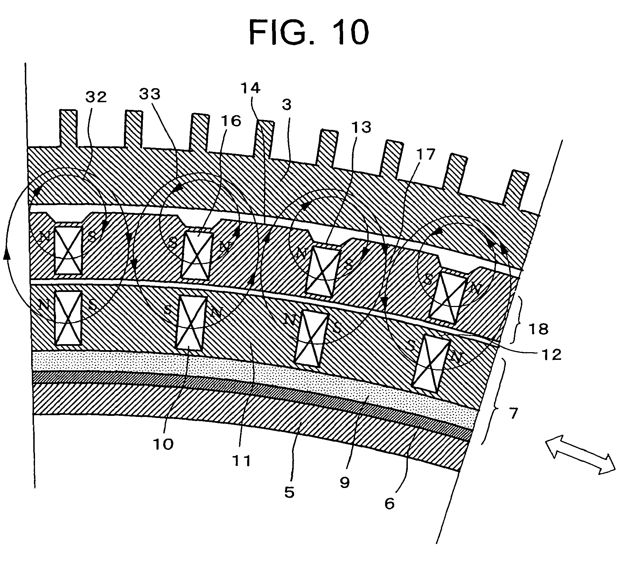

Yet another embodiment of the present invention will be described below with reference to FIG. 8 to FIG. 10. FIG. 8 is a side sectional view of the upper half of the eddy current retarder of this embodiment. FIG. 9 is a partial front sectional view illustrating the state during the brake OFF of the eddy current retarder shown in FIG. 8. FIG. 10 is a partial front sectional view illustrating the state during the brake ON of the eddy current retarder shown in FIG. 8.

As shown in FIG. 8, this eddy current retarder 1 comprises a drum-shaped brake rotor 3 mounted on a rotation shaft 2 such as a propulsion shaft of a vehicle and a stator 4 (magnetic force source) disposed radially on the inner side of the brake rotor 3 and mounted on a fixed side such as a mission case. The retardation braking of the rotation shaft 2 is induced by generating an eddy current in the rotor 3 by supplying magnetism from the stator 4 to the rotor 3, and the retardation braking is canceled by shielding the magnetism inside the stator 4.

The stator 4 has a hollow casing 5 supported on the fixed side, and an outer magnet ring (first magnet ring) 18 is mounted on the outer peripheral wall of the casing 5 opposite the inner surface of the brake rotor 3. As shown in FIG. 9 and FIG. 10, the outer magnet ring 18 has a magnetic member 17 (a laminated body of electric steel sheets, an iron block material, or the like) mounted on the casing 5 and a plurality of permanent magnets 16 embedded in the magnetic member 17 with a constant spacing in the circumferential direction. Each permanent magnet 16 has a magnetic pole on both end portions thereof in the circumferential direction and the adjacent permanent magnets 16 are so set as to face each other by the identical poles. A thin sheet section 13 composed of the magnetic member 17 is formed on the radial outside of each permanent magnet 16. Protruding sections 14 that protrude radially outwardly are formed in the magnetic member 17 located between the permanent magnets 16.

An inner magnet ring (second magnet ring) 7, which is identical to the outer magnet ring 18, is rotatably accommodated inside the casing 5 via a bush 6. This inner magnet ring 7 is provided to face the outer magnet ring 18 from the side (radial inner side) opposite that of the brake rotor 3 and rotated by an actuator 8 (for example, a hydraulic cylinder) provided on the side section of the casing 5. The inner magnet ring 7 has a support ring 9 composed of a nonmagnetic body (austenitic stainless steel or the like) a magnetic member 11 (a laminated body of electric steel sheets, an iron block material, or the like) provided on the outer periphery of the support ring 9, and a plurality of permanent magnets 10 embedded in the magnetic member 11 with a constant spacing in the circumferential direction. The permanent magnets 10 have magnetic poles on both end portions thereof in the circumferential direction and are so set that the adjacent permanent magnets 10 face each other by identical poles. A thin sheet section 12 composed of a magnetic member 11 is formed on the radial outer side of each permanent magnets 10. The pitches of the permanent magnets 10, 16 of the inner and outer magnet rings 7, 18 are set almost equal to each other.

When the retardation braking of the eddy current retarder is OFF, the inner magnet ring 7 is rotated by the actuator 8 and, as shown in FIG. 9, each permanent magnet 10 of the inner magnet ring 7 and each permanent magnet 16 of the outer magnet ring 8 face each other by mutually different magnetic poles. As a result, a short magnetic circuit 31 is formed between the permanent magnets 10 of the inner magnet ring 7 and the magnetic member 11 and between the permanent magnets 16 of the outer magnet ring 18 and the magnetic member 17. Therefore, no magnetism acts upon the brake rotor 3 and no retardation braking is generated. At this time, the magnetic flux flowing from the permanent magnets 16 of the outer magnet ring 18 to the brake rotor 3 is short circuited through the thin sheet section 13 and magnetic leak to the brake rotor 3 can be effectively prevented.

On the other hand, when the retardation braking is ON, the inner magnet ring 7 is rotated and, as shown in FIG. 10, the permanent magnets 10 of the inner magnet ring 7 and the permanent magnets 16 of the outer magnet ring 18 are caused to face each other by identical magnetic poles. As a result, magnetic circuits 32, 33 are formed between permanent magnets 10, 16 of the inner and outer magnet rings 7, 18, magnetic members 11, 17, and brake rotor 3. Therefore, an eddy current is generated in the brake rotor 3, and the retardation braking of the rotation shaft 2 is effected by the interaction of this eddy current and the magnetic flux from the permanent magnets 10, 16. At this time, because the protruding sections 14 protruding radially outwardly are formed in the sections of the magnetic member 17 positioned between the permanent magnets 16, the air gap between the magnetic member 17 and the brake rotor 3 is small and a high braking force can be obtained.

The inventors have discovered that in such an eddy current retarder, the brake capacity can be ensured and also magnetic leak can be prevented effectively by adequately setting the ratio of the magnetic force of the permanent magnets 10 of the inner magnet ring 7 and the permanent magnets 16 of the outer magnet ring 18. More specifically, the brake capacity can be effectively ensured and at the same time the magnetic leak can be effectively prevented by making the magnetic force of the permanent magnets 10 of the inner magnet ring 7 larger at the prescribed ratio than the magnetic force of the permanent magnets 16 of the outer magnet ring 18.

The inventors have also conducted a variety of tests by varying the ratio of the magnetic force of the permanent magnets 16 of the outer magnet ring 18 and the magnetic force of the permanent magnets 10 of the inner magnet ring 7 with the object of finding the optimal value of this ratio. Here, the tests were conducted by setting the axial length (length in the left-right direction in FIG. 8) and circumferential length (length in the left-right direction in FIG. 9 and FIG. 10) of the permanent magnets 10, 16 such that they are almost equal to each other and varying the radial lengths L1, L2 of the permanent magnets 10, 16 (see FIG. 9). Thus, the area of the magnetic pole surface of the permanent magnets 10, 16 can be changed by varying the radial lengths L1, L2 of the permanent magnets 10, 16. Because the permanent magnets 10, 16 that were used had almost equal magnetic fluxes per unit surface area, the magnetic forces of permanent magnets 10, 16 are almost proportional to the area of the magnetic pole surface.

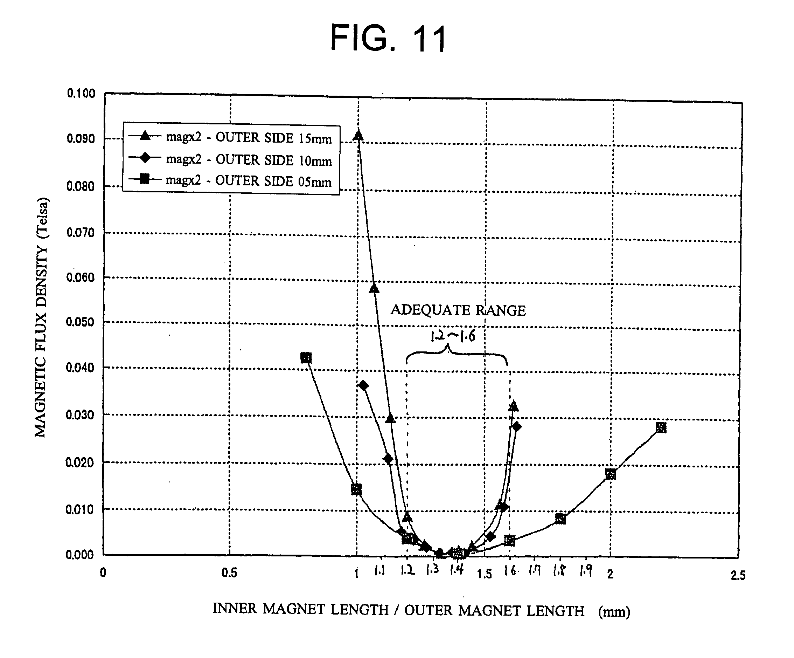

Test results are shown in FIG. 11 to FIG. 13.

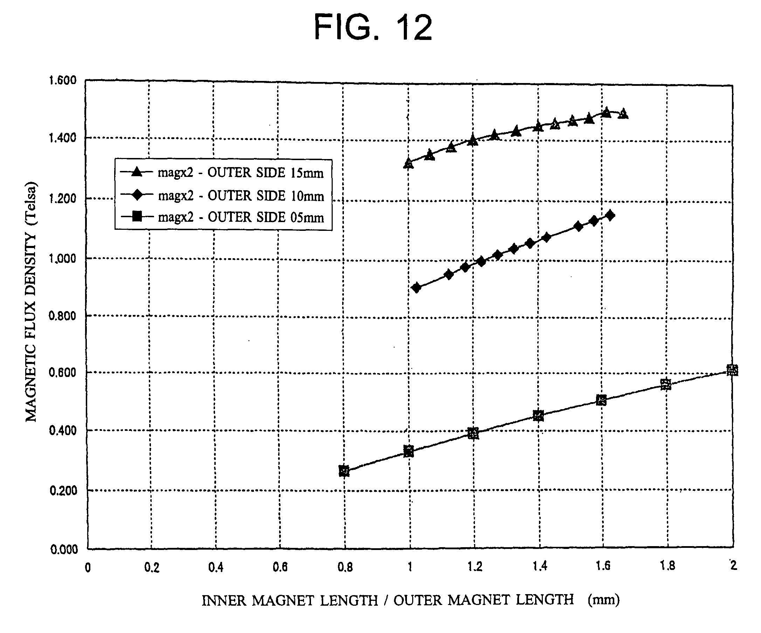

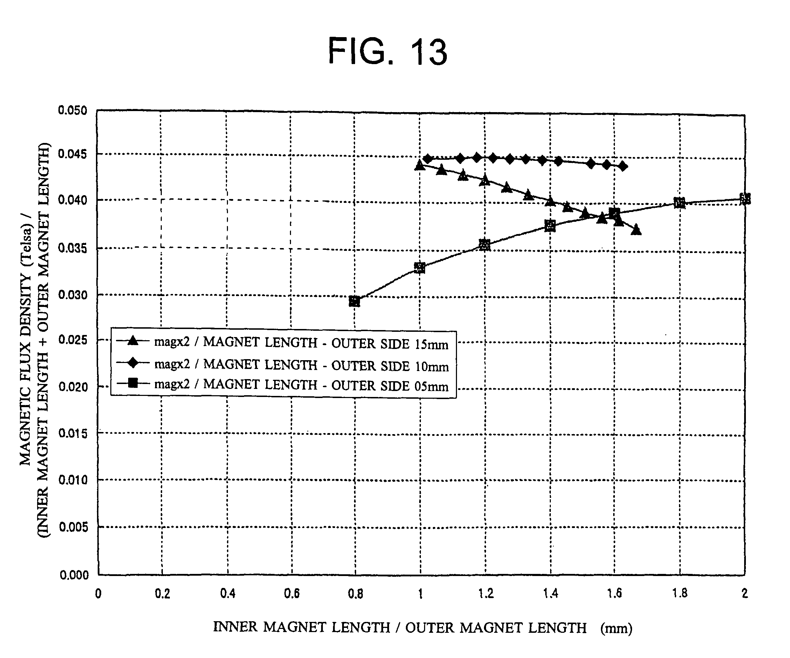

FIG. 11 shows the analysis results relating to a magnetic flux density of the outermost peripheral section B (see FIG. 9) of the magnetic member 17 during the brake OFF and serves to judge the magnetic leak during the brake OFF. FIG. 12 shows the analysis results relating to a magnetic flux density of the outermost peripheral section B of the magnetic member 17 during the brake ON and serves to judge the brake capacity. FIG. 13 shows values obtained by dividing the magnetic flux density of the outermost peripheral section B of the magnetic member 17 during the brake ON by the total radial length (L1 + L2) of the permanent magnets 10, 16 and serves to judge the braking efficiency.

A radial length L1 of the permanent magnet 16 of the outer magnet ring 18 of three types: 5, 10, and 15 mm was used as the test condition and the ratio (L2/L1) of the radial length L2 of the permanent magnet 10 of the inner magnet ring 7 to the radial length L1 was varied within a range of 0.8-2.2. In FIG. 11 to FIG. 13, the line represented by square points was obtained with the radial length L1 of the permanent magnet 16 being 5 mm, the line represented by rhombic points was obtained with the length of 10 mm, and the line represented by triangular points was obtained with the length of 15 mm.

First, as shown in FIG. 11, when the ratio (L2/L1) of the radial length L2 of the permanent magnet 10 of the inner magnet ring 7 to the radial length L1 of the permanent magnet 16 of the outer magnet ring 18 is taken as about 1.4, the leak magnetic flux becomes almost zero, and when this ratio becomes higher or lower, the leaking magnetic flux gradually increases. In other words, if the ratio of the magnetic force of the permanent magnet 10 and permanent magnet 16 is set close to 1.4, more specifically, within a range of from about 1.2 to about 1.6, the magnetic flux leak can be almost or completely eliminated. If this ratio becomes too low, the magnetic flux leak increases apparently because the force of the permanent magnets 10 of the inner magnet ring 7 that attracts the magnetic flux of the permanent magnets 16 of the outer magnet ring 18 decreases and part of the magnetic flux of the permanent magnets 16 leaks to the brake rotor 3. On the other hand, if the ratio becomes too large, the leaking magnetic flux increases apparently because the magnetic force of the permanent magnets 10 of the inner magnet ring 7 becomes large and part of the magnetic flux hereof leaks to the brake rotor 3. The above-described range of 1.2 to 1.6 can be said to be a range in which almost the entire magnetic flux of the permanent magnets 16 of the outer magnet ring 18 is attracted to the permanent magnets 10 of the inner magnet ring 7 and the magnetic flux of the permanent magnets 10 of the inner magnet ring 7 flows to the brake rotor 3.

Furthermore, the graph shown in FIG. 11 demonstrates that the smaller is the radial length L1 of the permanent magnets 16 of the outer magnet ring 18, the larger is the region with a low leaking magnetic flux.

Furthermore, as shown in FIG. 12, it is clear, that the braking force during the brake ON increases with the increase in the ratio of the radial length L2 of the permanent magnets 10 of the inner magnet ring 7 to the radial length L1 of the permanent magnets 16 of the outer magnet ring 18 (that is, with the increase in the radial length L2 of the permanent magnets 10). Furthermore, it is clear that the larger is the radial length L1 of the permanent magnets 16 of the outer magnet ring 18, the larger is the braking force. In other words, those results also demonstrate that the higher is the magnetic force of the permanent magnets 10, 16, the higher is the braking force.

Furthermore, as shown in FIG. 13, it is clear that the magnetic flux per unit length of the magnet (braking efficiency) is almost constant and does not depend on the aforementioned ratio (L2/L1) when the radial length L1 of the permanent magnets 16 of the outer magnet ring 18 is 10 mm, increases with the increase in the ratio when the radial length L1 of the permanent magnets 16 is 5 mm, and decreases with the increase in the ratio when the radial length of the permanent magnets 16 is 15 mm. In other words, when the radial length L1 of the permanent magnets 16 of the outer magnet ring 18 is 15 mm, the braking torque is generated more under the effect of the permanent magnets 16 of the outer magnet ring 18 than the permanent magnets 10 of the inner magnet ring 7, and when the radial length L1 of the permanent magnets 16 of the outer magnet ring 18 is 5 mm, the braking torque is generated more under the effect of the permanent magnets 10 of the inner magnet ring 7 than the permanent magnets 16 of the outer magnet ring 18.

The above-described results demonstrate that if the ratio of the magnetic force of the magnets 10 of the inner magnet ring 7 to the magnetic force of the magnets 16 of the outer magnet ring 18 is set within a range of 1 : (about 1.2 to about 1.6), the braking force equal to or higher than that of the conventional systems can be ensured, while almost entirely or entirely preventing the magnetic leak.

Furthermore, when an eddy current retarder is actually designed, the aforementioned ratio may be set depending on the priority of preventing the magnetic leak and ensuring the braking force. In other words, if the magnetic leak prevention is more important, the ratio may be set close to 1.4, and if the braking force is more important, the ratio may be brought as close to 1.6 as possible. In any case if the ratio is within a range of about 1.2 to about 1.6, both the magnetic leak prevention and the guaranteed braking force can be ensured at a comparatively high level.

A variety of modifications of the above-described embodiments can be considered.

For example, in the above-described embodiment, a case was explained where the ratio of the radial lengths L1, L2 of the permanent magnets 16, 10 of the outer and inner magnet rings 18, 7 was set, but the present invention is not limited to this feature. In other words, because the ratio of the magnetic forces of the permanent magnet 10 and permanent magnet 16 may be within the aforementioned range, the ratio of the thicknesses in the axial direction may be set within this range or the ratio of the intensities of (magnetic force per unit surface area) of the magnets may be set within this range.

Furthermore, in the above-described embodiment, a configuration was explained in which the inner magnet ring 7 was rotated, but the present invention can be also employed in a configuration in which the inner magnet ring 7 is fixed and the outer magnet ring 18 is rotated.

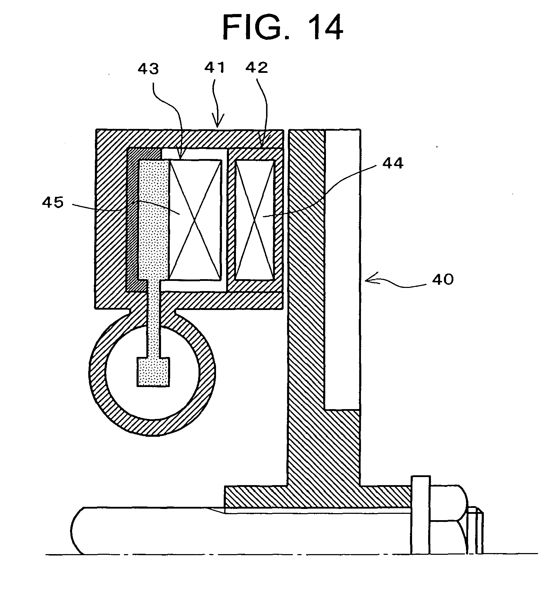

Furthermore, as shown in FIG. 14, the present invention can be also employed in an eddy current retarder of type equipped with a disk-shaped brake rotor 40. In this configuration, a casing 41 is mounted on the fixed side opposite, from the side section, the brake rotor 40, and a first magnet ring 42 (equivalent to the outer magnet ring 18 shown in FIG. 8) is mounted on the casing 41. Furthermore, a second magnet ring 43 (equivalent to the inner magnet ring 7 in FIG. 8) is rotatably provided inside the casing 41 so as to face the first magnet ring 42 from the side opposite that of the brake rotor 40. The first and second magnet rings 42, 43, similarly to the outer and inner magnet rings 18, 7 shown in FIG. 8, comprises a plurality of permanent magnets 44, 45 disposed with the prescribed spacing in the circumferential direction and set so that the magnetic poles facing each other in the circumferential direction have the same polarity.

In such an eddy current retarder, too, the effect identical to that of the above-described embodiment can be obtained by setting the ratio of the magnetic force of the permanent magnets 45 of the second magnet ring 43 to the magnetic force of the permanent magnets 44 of the first magnet ring 42 within a range of 1:(about 1.2 to about 1.6).

The present application claims priority to Japanese Patent Applications No. 2003-140347 and 2003-140348 (both filed on May 19, 2003) and the contents of those applications are incorporated by reference in the present description.

## Claims

1. An eddy current retarder comprising:
a brake rotor mounted on a rotation shaft;
a first magnet ring disposed opposite said brake rotor and comprising a plurality of permanent magnets disposed with a spacing in the circumferential direction;
a second magnet ring disposed opposite said first magnet ring and comprising a plurality of permanent magnets disposed with a spacing in the circumferential direction; wherein
the magnetic force of each permanent magnet of said second magnet ring is set larger than the total magnetic force of one or a plurality of permanent magnets of said first magnet ring serving as a partner in forming a magnetic circuit during a brake OFF.

2. The eddy current retarder according to claim 1, wherein
the area of the magnetic pole surface of the permanent magnets of said second magnet ring is set substantially equal to the total area of the magnetic pole surface of one or a plurality of permanent magnets of said first magnet ring forming together therewith a magnetic circuit during said brake OFF, and
the magnetic flux density of the permanent magnets of said second magnet ring is made larger than the magnetic flux density of the permanent magnets of said first magnet ring.

3. The eddy current retarder according to claim 1, wherein
the magnetic flux densities of the permanent magnets of said second magnet ring and permanent magnets of said first magnet ring are set substantially equal to each other, and
the area of the magnetic pole surface of the permanent magnets of said second magnet ring is set larger than the total area of the magnetic pole surface of one or a plurality of permanent magnets of said first magnet ring forming together therewith a magnetic circuit during said brake OFF.

4. The eddy current retarder according to any of claims 1 to 3, wherein the opposite phases of said first magnet ring and said second magnet ring during said brake OFF are set based on the magnetic force, magnetic flux density, or difference or ratio of the magnetic pole surface areas in the permanent magnets of said first magnet ring and permanent magnets of said second magnet ring.

5. An eddy current retarder comprising:
a brake rotor mounted on a rotation shaft;
an outer magnet ring disposed opposite said brake rotor from the inner side thereof and comprising a plurality of permanent magnets that are set with a spacing in the circumferential direction so that magnetic poles facing each other in the circumferential direction have the same polarity;
an inner magnet ring disposed opposite said outer magnet ring from the inner side thereof and comprising a plurality of permanent magnets that are set with a spacing in the circumferential direction so that magnetic poles facing said outer magnet ring alternate in the circumferential direction, in which a brake ON state in which a magnetic circuit is formed between said outer and inner magnet rings and said brake rotor is obtained by causing said outer magnet ring and said inner magnet ring to oppose each other at the prescribed phase, and a brake OFF state in which a short magnetic circuit is formed between said outer magnet ring and said inner magnet ring is obtained by rotating said outer magnet ring and/or said inner magnet ring through the prescribed phase from the brake ON state; wherein
the magnetic force of the permanent magnet of said inner magnet ring is set larger than the total magnetic force of one or a plurality of permanent magnets of said outer magnet ring serving as a partner in forming with one another a magnetic circuit in said brake OFF state, and
magnetic flux leaking to said brake rotor in the brake OFF state is almost zeroed.

6. The eddy current retarder according to claim 5, wherein
said outer magnet ring comprises a ring-shaped magnetic member and said plurality of permanent magnets embedded with a constant spacing in the circumferential direction in the magnetic member, and
a thin sheet section composed of said magnetic member is formed on the radial outside of each permanent magnet.

7. An eddy current retarder comprising:
a brake rotor mounted on a rotation shaft;
a first magnet ring disposed opposite said brake rotor and comprising a plurality of permanent magnets disposed with a spacing in the circumferential direction and having magnetic poles on end surfaces on both sides in the circumferential direction;
a second magnet ring disposed opposite said first magnet ring and comprising a plurality of permanent magnets disposed with a spacing in the circumferential direction and having magnetic poles on end surfaces on both sides in the circumferential direction; wherein
the ratio of the magnetic force of the magnet of said first magnet ring and the magnetic force of the magnet of said second magnet ring is set within a range of 1 : (about 1.2 to about 1.6).

8. The eddy current retarder according to claim 7, wherein
the magnetic forces per unit surface area of the magnets of said first magnet ring and second magnet ring are set almost equal to each other, and
the ratio of the area of the magnetic pole surface of the magnet of said first magnet ring and the area of the magnetic pole surface of the magnet of said second magnet ring is set within a range of 1 : (about 1.2 to about 1.6).

9. The eddy current retarder according to claim 7 or 8, wherein
the axial lengths and circumferential lengths of the magnets of said first magnet ring and second magnet ring are set substantially equal to each other, and
the ratio of the radial length of the magnet of said first magnet ring and the radial length of the magnet of said second magnet ring is set within a range of 1 : (about 1.2 to about 1.6).

10. An eddy current retarder comprising:
a brake rotor mounted on a rotation shaft;
an outer magnet ring disposed opposite said brake rotor from the inner side thereof and comprising a plurality of permanent magnets that are set with a spacing in the circumferential direction so that magnetic poles facing each other in the circumferential direction have the same polarity;
an inner magnet ring disposed opposite said outer magnet ring from the inner side thereof and comprising a plurality of permanent magnets that are set with a spacing in the circumferential direction so that magnetic poles facing each other in the circumferential direction have the same polarity, in which a brake ON state in which a magnetic circuit is formed between said outer and inner magnet rings and said brake rotor is obtained by causing said outer magnet ring and said inner magnet ring to oppose each other at the prescribed phase, and a brake OFF state in which a short magnetic circuit is formed between said outer magnet ring and said inner magnet ring is obtained by rotating said outer magnet ring and/or said inner magnet ring through the prescribed phase from the brake ON state; wherein
the ratio of the magnetic force of the magnet of said outer magnet ring and the magnetic force of the magnet of said inner magnet ring is set within a range of 1 : (about 1.2 to about 1.6).

11. The eddy current retarder according to claim 10, wherein
said outer magnet ring comprises a ring-shaped magnetic member and said plurality of permanent magnets embedded with a constant spacing in the circumferential direction in the magnetic member, and
a thin sheet section composed of said magnetic member is formed on the radial outside of each permanent magnet.

12. The eddy current retarder according to claim 11, wherein protruding sections that protrude radially outwardly are formed in the sections of said magnetic member positioned between the permanent magnets.
